# EUROPÄISCHE PATENTSCHRIFT

(11) **EP 3 420 135 B1**
(45) Veröffentlichungstag und Bekanntmachung des Hinweises auf die Patenterteilung: **23.10.2019**
(21) Anmeldenummer: 17715395.4
(22) Anmeldetag: 27.01.2017
(51) Int. Cl.: E01B 27/20, E01B 33/06, E01B 35/00

(54) **MASCHINE MIT STABILISIERUNGSAGGREGAT UND MESSVERFAHREN**
MACHINE WITH STABILIZATION ASSEMBLY, AND MEASUREMENT METHOD
MACHINE AVEC GROUPE DE STABILISATION ET PROCÉDÉ DE MESURE

(30) Priorität: 24.02.2016 AT 932016
(43) Veröffentlichungstag der Anmeldung: 02.01.2019
(73) Patentinhaber: Plasser & Theurer Export von Bahnbaumaschinen Gesellschaft m.b.H., 1010 Wien (AT)
(72) Erfinder: AUER, Florian, 1010 Wien (AT); BÜRGER, Martin, 4030 Linz (AT)
(86) Internationale Anmeldenummer: PCT/EP2017/000103
(87) Internationale Veröffentlichungsnummer: WO 2017/144152

(56) Entgegenhaltungen:
- DE-A1- 4 102 870
- DE-A1- 4 102 871

## Beschreibung

### Gebiet der Technik

Die Erfindung betrifft eine Maschine mit einem mittels Schienenfahrwerken auf Schienen eines Gleisrostes verfahrbaren Maschinenrahmen und mit einem Stabilisationsaggregat, das einen Schwingungserreger zur Erzeugung horizontaler, quer zur Maschinenlängsrichtung verlaufender Schwingungen und auf den Schienen abrollbare Spurkranzrollen umfasst, mit einer am Maschinenrahmen angebrachten Kamera zur Erfassung eines in Schwingung versetzten Abschnittes des Gleisrostes, wobei die Kamera mit einer Auswerteeinrichtung verbunden ist, um aus erfassten Bilddaten eine resultierende Auslenkung des Gleisrostes abzuleiten. Zudem betrifft die Erfindung ein Messverfahren.

### Stand der Technik

Ein Stabilisationsaggregat wird zur dynamischen Gleisstabilisation eingesetzt. Konkret dient es der Herstellung einer nachhaltigen Gleislage nach dem Heben, Richten und Stopfen eines Gleises im Schotterbett. Dabei wird mittels des Stabilisationsaggregats eine horizontale Schwingung erzeugt und auf das Gleis übertragen, um durch ein Einrütteln des Gleises eine bessere Haltbarkeit der Gleislage herbeizuführen. Dadurch werden Nachsetzungen im Schotterbett, welche nach dem Heben, Richten und Stopfen eines Gleises auftreten, stark vermindert. Des Weiteren wird der Querverschiebewiderstand des Gleises im Schotterbett wesentlich erhöht. Eine entsprechende Maschine ist beispielsweise aus der EP 0 666 371 A1 und der DE 41 02 870 A1 bekannt.

In der WO 2008/009314 A1 ist ein Stabilisierungsaggregat mit einer regelbaren dynamischen Schlagkraft offenbart. Dabei ist jedoch nur die auf den jeweiligen Schienenkopf des Gleises einwirkende Schwingung messbar, nicht jedoch die resultierende Schwingung der Schwellen des Gleises.

### Zusammenfassung der Erfindung

Der Erfindung liegt die Aufgabe zugrunde, für eine Maschine der eingangs genannten Art eine Verbesserung gegenüber dem Stand der Technik anzugeben. Zudem soll ein Messverfahren angegeben werden, aus dem die resultierende Schwingung des Gleisrostes hervorgeht.

Erfindungsgemäß wird diese Aufgabe gelöst durch eine Maschine gemäß Anspruch 1 und ein Verfahren gemäß Anspruch 5. Abhängige Ansprüche geben vorteilhafte Ausgestaltungen der Erfindung an.

Die Kamera ist zur Aufnahme zweidimensionaler Bilder ausgebildet. Entsprechende Bilddaten sind mit einem Industrie-PC in der erforderlichen Geschwindigkeit auswertbar. Auf diese Weise ist die Amplitude der Schwellenauslenkung erfassbar, welche ein Maß für die tatsächlich wirksame Schwingung zur Stabilisierung des Gleises ist. Eine damit einhergehende Verbesserung und Dokumentation der Stabilisierungsqualität sind klare Vorteile gegenüber bisherigen Lösungen.

In einer Weiterbildung der Erfindung ist vorgesehen, dass die Auswerteeinrichtung mit einer Steuerung des Stabilisationsaggregats verbunden ist, um den Schwingungserreger in Abhängigkeit der resultierenden Auslenkung anzusteuern. Damit ist die Möglichkeit geschaffen, das Stabilisationsaggregat mit einer Regelung auszustatten, um während eines Arbeitseinsatzes die dynamische Schwellenauslenkung konstant zu halten.

Des Weiteren ist es vorteilhaft, wenn die Kamera in einer vertikalen, quer zum Gleis verlaufenden Symmetrieebene zwischen zwei Spurkranzrollen des Stabilisierungsaggregats angeordnet ist. In diesem Bereich ist die Amplitude der jeweiligen Schwingungsperiode zu erwarten, sodass ein schmaler Erfassungsbereich der Kamera ausreicht, um die erforderlichen Bilddaten aufzunehmen.

Um etwaige Schwingungen des Maschinenrahmens in die Ermittlung der resultierenden Auslenkung des Gleisrostes berücksichtigen zu können ist es sinnvoll, wenn am Maschinenrahmen im Bereich der Kamera ein Beschleunigungsaufnehmer angeordnet ist.

Das erfindungsgemäße Messverfahren sieht vor, dass vom schwingenden Bereich des Gleisrostes mittels der Kamera in einer Draufsicht fortlaufend Bilddaten erfasst werden und dass aus den erfassten Bilddaten eine resultierende Auslenkung des Gleisrostes abgeleitet wird. Damit ist eine Dokumentation der Schwellenauslenkung als relevanten Parameter für die Reibleistung des Gleises bereits während der dynamischen Gleisstabilisierung möglich.

In einer einfachen Ausprägung des Verfahrens ist vorgesehen, dass ein zum Zeitpunkt einer maximalen Auslenkung in eine Richtung aufgenommenes erstes Bild mit einem zum Zeitpunkt einer maximalen Auslenkung in die Gegenrichtung aufgenommen zweiten Bild verglichen wird, um daraus die resultierende Auslenkung des Gleisrostes abzuleiten. Mit diesem Verfahren wird die resultierende Auslenkung des Gleisrostes genau erfasst.

Dabei ist es vorteilhaft, wenn eine Lageabweichung von in beiden Bildern identischen Bildinhalten als Maß für die resultierende Auslenkung des Gleisrostes ausgewertet wird. Für eine derartige Mustererkennung (Matching) sind robuste und effiziente Softwarealgorithmen einsetzbar, die eine rasche und sichere Auswertung der aufgenommenen Bilddaten erlauben.

Besonders effizient ist die Auswertung, wenn als Bildinhalte Konturen einer Schwelle und/oder Schienenbefestigungsmittel ausgewählt werden.

Eine weitere Ausprägung des Verfahrens sieht vor, dass während einer Schwingungsperiode des Gleisrostes zu vorgegebenen Aufnahmezeitpunkten Bilddaten erfasst werden, dass zu jedem Aufnahmezeitpunkt eine Auslenkung des Gleisrostes bestimmt wird und dass daraus eine sinusförmige Schwingung des Gleisrostes abgeleitet wird. Die Amplitude dieser angenommenen sinusförmigen Schwingung entspricht dann der resultierenden maximalen Auslenkung des Gleisrostes.

Um eine ausreichende Genauigkeit sicherzustellen, werden die Bilder mit einer Bildrate aufgenommen, die zumindest einer vierfachen Frequenz der horizontalen Schwingung des Gleisrostes entspricht. Eine Erhöhung der Bildrate steigert die Genauigkeit, wobei auch der zu verarbeitende Datenstrom ansteigt.

Zur weiteren Steigerung der Auswertungseffizienz werden die Erfassung der Bilddaten und die horizontale Schwingung des Gleisrostes synchronisiert. Sobald eine Synchronisation erreicht ist, sind die Aufnahmen der beiden maximalen Auslenkungen einer Schwingungsperiode auf einfache Weise ermittelbar. Als Referenzaufnahmen dienen beispielsweise die Nulldurchgänge der Schwingung, die periodisch eine Überdeckung aufweisen.

Ein weiterer Vorteil des Verfahrens kommt zum Tragen, wenn eine Phasenverschiebung zwischen einer auf den Gleisrost einwirkenden Schwingung des Stabilisierungsaggregats und der mittels der Kamera erfassten resultierenden Schwingung des Gleisrostes ermittelt wird. Diese Phasenverschiebung dient als Maß für die Massenträgheit und die Dämpfung des Gleisrostes in lateraler Richtung. Mit der Dokumentation dieser Größe erhält ein Streckenbetreiber wichtige Informationen über den Zustand des Gleises.

Des Weiteren wird das Verfahren verbessert, wenn im Bereich der Kamera eine Schwingung des Maschinenrahmens gemessen und in die Auswertung der resultierenden Auslenkung des Gleisrostes einbezogen wird. Sobald störende Schwingungen des Maschinenrahmens auftreten, werden diese bei der Bildauswertung kompensiert.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Maschine mit Stabilisierungsaggregat
- Fig. 2: Stabilisierungsaggregat
- Fig. 3: Bild bei maximaler Auslenkung in eine Richtung
- Fig. 4: Bild bei maximaler Auslenkung in Gegenrichtung
- Fig. 5: Auswertung mit Mustererkennung
- Fig. 6: Schwingungsverläufe

### Beschreibung der Ausführungsformen

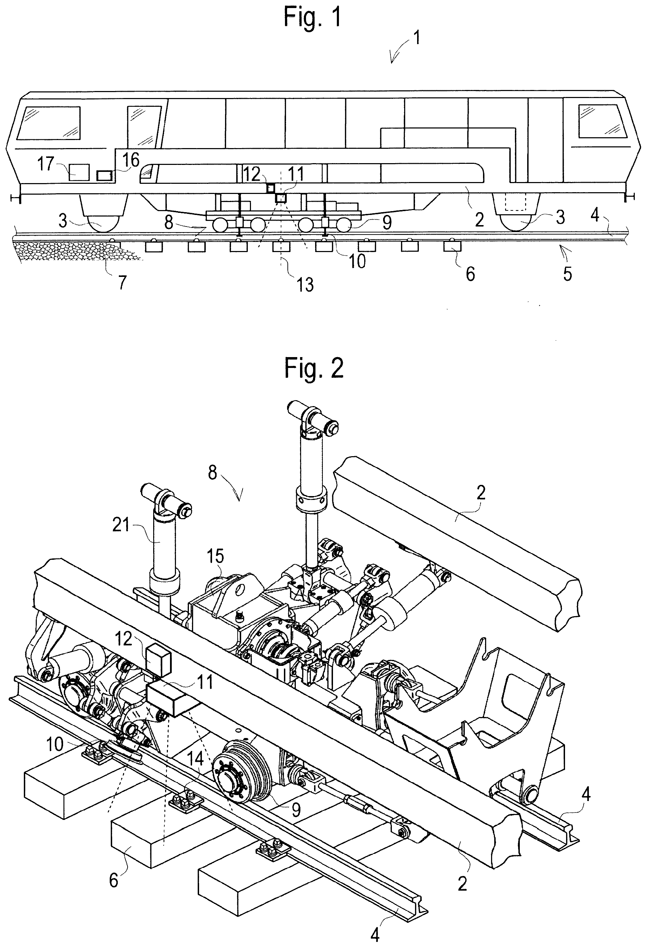

Die in Fig. 1 dargestellte Maschine 1 umfasst einen Maschinenrahmen 2, der auf Schienenfahrwerken 3 gestützt auf Schienen 4 eines Gleisrostes 5 verfahrbar ist. Der Gleisrost 5 besteht aus den Schienen 4 und Schwellen 6 und ist in einem Schotterbett 7 gelagert. Mit dem Maschinenrahmen 2 ist ein Stabilisierungsaggregat 8 beweglich verbunden. Dieses Stabilisierungsaggregat 8 umfasst mehrere Räder 9 und Spurkranzrollen 10 zum Festhalten des Gleisrostes 5. Mittels dieser Räder 9 und Spurkranzrollen 10 wird eine mittels Stabilisierungsaggregat 8 erzeugte Schwingung auf den Gleisrost 5 übertragen.

Nach dem Stand der Technik wird die Bewegung des Stabilisierungsaggregats 8 als Maß für die eingebrachte Schwingung herangezogen. Tatsächlich erfolgt dabei eine Bewegungserfassung des Schienenkopfes der jeweiligen Schiene 4. Insbesondere aufgrund einer auftretenden Schienenverkippung während der dynamischen Gleisstabilisierung entspricht die Schienenkopfauslenkung sₑ nicht der Bewegung der mit den Schienen 4 verbunden Schwellen 6 und damit des Gleisrostes 5. Die dynamische Schwellenauslenkung sᵣ korreliert mit der Relativbewegung zwischen den Schwellen 6 und dem Schotterbett 7 und ist maßgebend für die in den Gleiskörper eingebrachte Stabilisierungsarbeit.

Um die resultierende Schwingung des Gleisrostes 5 zu erfassen ist erfindungsgemäß am Maschinenrahmen 2 eine Kamera 11 angeordnet. Diese umfasst beispielsweise einen hinter einem Objektiv verbauten Bildsensor und nimmt erfindungsgemäß zweidimensionale Bilder des im Schotterbett 7 gelagerten Gleisrostes 5 in einer Draufsicht auf. Alternativ dazu können auch andere optische Sensoren zum Einsatz kommen.

Durch die Befestigung der Kamera 11 am Maschinenrahmen 2 ist eine Entkopplung gegenüber den Schwingungen des gegenüber dem Maschinenrahmen 2 beweglich aufgehängten Stabilisierungsaggregats 8 sichergestellt. In der Regel bildet der Maschinenrahmen 2 nämlich aufgrund seiner großen Massenträgheit eine stabile Basis gegenüber dem Stabilisierungsaggregat 8.

Nur bei sehr leichten Maschinen 1 besteht die Möglichkeit, dass der Maschinenrahmen 2 keine ausreichend stabile Basis darstellt. Dann ist es sinnvoll, wenn im Bereich der Kamera 11 ein Beschleunigungsaufnehmer 12 angeordnet ist, um eine etwaige Schwingung des Maschinenrahmens 2 zu erfassen. Das geschieht beispielsweise durch doppelte Integration der gemessenen Beschleunigungen. Bei der Auswertung der Bilddaten dienen diesen Schwingungsdaten des Maschinenrahmens 2 zur Kompensation einer unerwünschten Kamerabewegung.

Günstigerweise ist die Kamera 11 in einer vertikalen Symmetrieebene 13 zwischen zwei Spurkranzrollen 10 bzw. Rollenzangen angeordnet, damit mit einem möglichst kleinen Bildausschnitt der Bereich mit der maximalen Gleisrostauslenkung erfasst wird.

Ein Stabilisierungsaggregat 8 ist im Detail in Fig. 2 dargestellt. Die Kamera 11 ist am Maschinenrahmen 2 befestigt und erfasst den äußeren Schwellenbereich. Auch Schienenbefestigungen 14 werden günstigerweise abgebildet, zur Anreicherung der für eine Auswertung zur Verfügung stehenden Bildinhalte. Zentral ist ein Schwingungserreger 15 angeordnet, der entweder eine konstante oder eine einstellbare Schwingung erzeugt. Im letzteren Fall ist die vorteilhafte Möglichkeit gegeben, die Schwingung an die erfasste resultierende Auslenkung sᵣ des Gleisrostes 5 anzupassen. Erzeugt werden die Schwingungen beispielsweise mittels rotierender Unwuchten.

Anhand der Bildinhalte erfolgt mittels einer Auswerteeinrichtung 16 laufend eine Ermittlung der momentanen Schwellenauslenkung sᵣ. Die Auswerteeinrichtung 16 ist beispielsweise gemeinsam mit einer Steuerung 17 des Stabilisierungsaggregats 8 in einem Schaltschrank untergebracht. Zur Übertragung der Bilddaten ist die Kamera 11 mit der Auswerteeinrichtung 16 mittels eines Datenkabels oder über einen Datenbus verbunden. An letzteren ist in der Regel auch die Steuerung 17 angeschlossen.

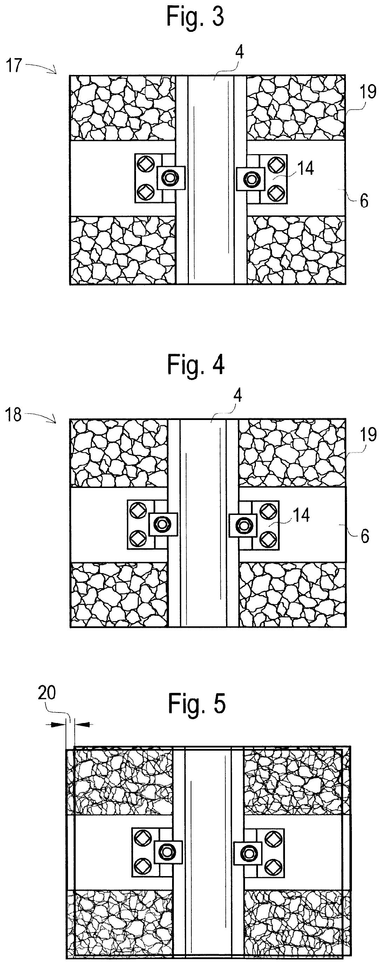

Das erfindungsgemäße Messverfahren basiert auf der laufenden Aufnahme von Bildern des in Schwingung versetzten Gleisrostes 5. Im vorliegenden Beispiel erfolgen Aufnahmen der jeweiligen Schwellenoberseite mit den Schienenbefestigungen 14, dargestellt in den Figuren 3 und 4. Fig. 3 zeigt ein erstes Bild 17 zum Zeitpunkt einer maximalen Auslenkung in eine Richtung und Fig. 4 zeigt ein zweites Bild 18 zum Zeitpunkt einer maximalen Auslenkung in Gegenrichtung. Zur Aufnahme auswertbarer Bilder 17, 18 sind eine kurze Belichtungszeit und eine hohe Bildrate erforderlich. Günstigerweise ist die Bildrate deutlich höher als die Frequenz des Stabilisationsaggregats 8.

Wenn die Bildrate der vierfachen Frequenz des Stabilisationsaggregats 8 entspricht, werden pro Schwingungsperiode vier Bilder aufgenommen. Eine Synchronisation der Bilderfassung und der Schwingung erfolgt dann einfacherweise durch Variation der Bildrate, bis jedes zweite Bild eine Überdeckung der Bildinhalte in Gleisquerrichtung aufweist. Diese Bilder sind dann Abbildungen der Nulldurchgänge des in Schwingung versetzten Gleisrostes 5.

Mit der zulässigen Annahme, dass sich eine maximale Auslenkung aᵣ des Gleisrostes 5 im zeitlichen Mittel zwischen zwei Nulldurchgängen ereignet, bilden die beiden dazwischen aufgenommenen Bilder 17, 18 einer Schwingungsperiode ebendiese maximalen Gleisrostauslenkungen aᵣ ab. Das erste Bild 17 zeigt die maximale Auslenkung in eine Richtung und das zweite Bild 18 zeigt die maximale Auslenkung in die Gegenrichtung.

Alternativ dazu kann die Synchronisation über eine verknüpfte Ansteuerung des Schwingungserregers 15 und der Kamera 11 erfolgen. Das ist sinnvoll, wenn das Stabilisierungsaggregat 8 ohnehin in Abhängigkeit der erfassten Auslenkung des Gleisrostes 5 angesteuert wird. Beispielsweise wird die Phasenlage und Drehzahl der schwingungserzeugenden Unwuchten an die Bildrate angepasst.

Bei einer ausreichend hohen Bildrate ist keine Synchronisation erforderlich. In diesem Fall wird zunächst mittels der Auswerteeinheit in jedem aufgenommenen Bild die Lage übereinstimmender Bildinhalte bestimmt. Daraus lässt sich ein Bildzyklus für eine Schwingungsperiode ableiten, wobei jene beiden Bilder ausgewählt werden, deren übereinstimmende Bildinhalte die größte Lageabweichung voneinander aufweisen. Dabei zeigt das erste Bild 17 die maximale Auslenkung des Gleisrostes 5 in eine Richtung und das zweite Bild 18 die maximale Auslenkung in die Gegenrichtung.

Die Schwingungsamplitude als Maß für die maximale Auslenkung aᵣ des Gleisrostes 5 wird durch Überlagerung des ersten und des zweiten Bildes 17, 18 ermittelt. Entweder es werden beide Bilder 17, 18 mit ihren Bildrändern 19 in Überdeckung gebracht und der Abstand zwischen übereinstimmenden Bildinhalten ermittelt oder es werden die übereinstimmenden Bildeinhalte in Überdeckung gebrachten und eine Lageabweichung der beiden Bildränder 19 zueinander als Maß für die resultierende Schwingungsamplitude ausgewertet.

Fig. 5 zeigt einer Überlagerung der beiden Bilder 17, 18 aus Fig. 3 und 4. Dabei sind die übereinstimmenden Bildinhalte mittels Mustererkennung in Überdeckung gebracht. Für ein solches Matching sind Algorithmen bekannt, die in Echtzeit ausreichend genaue Ergebnisse liefern. Die Lageabweichung der Bildränder 19 zueinander gibt den Spitze-Spitze-Wert 20 der resultierenden Schwingung an. Halb so groß ist demnach die Amplitude als maximale Auslenkung aᵣ des Gleisrostes 5 in eine Richtung.

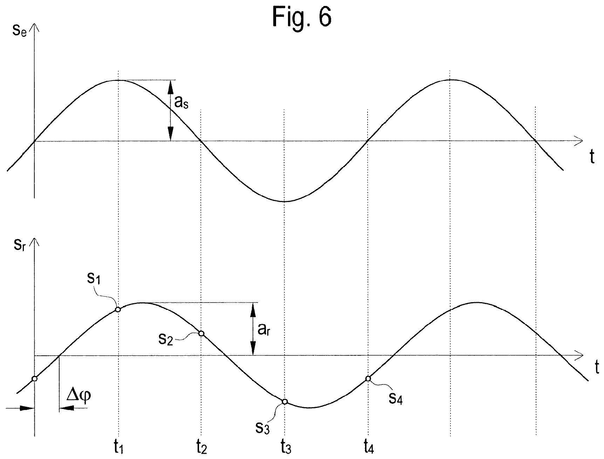

In Fig. 6 zeigt das obere Diagramm einen Schwingungsverlauf des Stabilisationsaggregats bzw. die Schienenkopfauslenkung sₑ über der Zeit t. Im unteren Verlauf ist die resultierende Auslenkung des Gleisrostes 5 bzw. die dynamische Schwellenauslenkung sᵣ über der Zeit t dargestellt. Das dynamische Verhalten des Gleiskörpers bestimmt dabei eine Abweichung zwischen den Amplituden aₛ, aᵣ dieser Schwingungsverläufe.

Zwischen den Schwingungsverläufen besteht eine Phasenverschiebung Δϕ. Diese ist beeinflusst von der Elastizität der Schienen 4 und der Stabilität der Schienenverbindungen 14. Weitere Einflussfaktoren sind die Reibung zwischen Schwellen 6 und Schotterbett 7 sowie eine auf das Stabilisierungsaggregat 8 wirkende vertikale Anpresskraft, die mittels Hydraulikzylinder 21 aufgebracht wird. Eine Aufzeichnung der Phasenverschiebung Δϕ dokumentiert demnach die Qualität des Gleiskörpers, insbesondere der Schienenverbindungen 14.

In der Darstellung sind pro Schwingungsperiode beispielhaft vier Aufnahmezeitpunkte t₁, t₂, t₃, t₄ angegeben. Aus den zu diesen Zeitpunkten t₁, t₂, t₃, t₄ aufgenommenen Bildern wird die jeweilige Schwellenauslenkung s₁, s₂, s₃, s₄ ermittelt. Dies geschieht mittels Mustererkennung, wobei beispielsweise die Lageänderung einer Schienenbefestigung 14 erfasst wird. In einer Ausprägung des erfindungsgemäßen Verfahrens wird aus den ermittelten Verlaufspunkten eine resultierende Sinuslinie errechnet, wobei diese angenommene Sinuslinie die maximale resultierende Auslenkung aᵣ des Gleisrostes 5 angibt.

## Patentansprüche

1. Maschine (1) mit einem mittels Schienenfahrwerken (3) auf Schienen (4) eines Gleisrostes (5) verfahrbaren Maschinenrahmen (2) und mit einem Stabilisationsaggregat (8), das einen Schwingungserreger (15) zur Erzeugung horizontaler, quer zur Maschinenlängsrichtung verlaufender Schwingungen und auf den Schienen (4) abrollbare Spurkranzrollen (10) umfasst, wobei am Maschinenrahmen (2) eine Kamera (11) angebracht ist zur Erfassung eines in Schwingung versetzten Abschnittes des Gleisrostes (5) und dass die Kamera (11) mit einer Auswerteeinrichtung (16) verbunden ist, um aus erfassten Bilddaten eine resultierende Auslenkung (sᵣ) des Gleisrostes (5) abzuleiten, **dadurch gekennzeichnet, dass** die Kamera (11) zur Aufnahme zweidimensionaler Bilder (17, 18) ausgebildet ist.

2. Maschine (1) nach Anspruch 1, **dadurch gekennzeichnet, dass** die Auswerteeinrichtung (16) mit einer Steuerung (17) des Stabilisationsaggregats (8) verbunden ist, um den Schwingungserreger (15) in Abhängigkeit der resultierenden Auslenkung (sᵣ) anzusteuern.

3. Maschine (1) nach Anspruch 1 oder 2, **dadurch gekennzeichnet, dass** die Kamera (11) in einer vertikalen, quer zum Gleis verlaufenden Symmetrieebene zwischen zwei Spurkranzrollen (10) des Stabilisationsaggregats (8) angeordnet ist.

4. Maschine (1) nach einem der Ansprüche 1 bis 3, **dadurch gekennzeichnet, dass** am Maschinenrahmen (2) im Bereich der Kamera (11) ein Beschleunigungsaufnehmer (12) angeordnet ist.

5. Messverfahren, welches mittels einer Maschine (1) nach einem der Ansprüche 1 bis 4 durchgeführt wird, **dadurch gekennzeichnet, dass** vom schwingenden Bereich des Gleisrostes (5) mittels der Kamera (11) in einer Draufsicht fortlaufend Bilddaten erfasst werden und dass aus den erfassten Bilddaten eine resultierende Auslenkung (sᵣ) des Gleisrostes (5) abgeleitet wird.

6. Messverfahren nach Anspruch 5, **dadurch gekennzeichnet, dass** ein zum Zeitpunkt einer maximalen Auslenkung in eine Richtung aufgenommenes erstes Bild (17) mit einem zum Zeitpunkt einer maximalen Auslenkung in die Gegenrichtung aufgenommen zweiten Bild (18) verglichen wird, um daraus die resultierende Auslenkung (sᵣ) des Gleisrostes (5) abzuleiten.

7. Messverfahren nach Anspruch 6, **dadurch gekennzeichnet, dass** eine Lageabweichung (20) von in beiden Bildern (17, 18) identischen Bildinhalten als Maß für die resultierende Auslenkung (sᵣ) des Gleisrostes (5) ausgewertet wird.

8. Messverfahren nach Anspruch 7, **dadurch gekennzeichnet, dass** als identische Bildinhalte Konturen einer Schwelle (6) und/oder Schienenbefestigungsmittel (14) ausgewählt werden.

9. Messverfahren nach Anspruch 5, **dadurch gekennzeichnet, dass** während einer Schwingungsperiode des Gleisrostes (5) zu vorgegebenen Aufnahmezeitpunkten (t₁, t₂, t₃, t₄) Bilddaten erfasst werden, dass zu jedem Aufnahmezeitpunkt eine Auslenkung (s₁, s₂, s₃, s₄) des Gleisrostes (5) bestimmt wird und dass daraus eine sinusförmige Schwingung des Gleisrostes (5) abgeleitet wird.

10. Messverfahren nach einem der Ansprüche 5 bis 9, **dadurch gekennzeichnet, dass** die Bilder (17, 18) mit einer Bildrate aufgenommen werden, die zumindest einer vierfachen Frequenz der horizontalen Schwingung des Gleisrostes (5) entspricht.

11. Messverfahren nach einem der Ansprüche 5 bis 10, **dadurch gekennzeichnet, dass** die Erfassung der Bilddaten und die horizontale Schwingung des Gleisrostes (5) synchronisiert werden.

12. Messverfahren nach einem der Ansprüche 5 bis 11, **dadurch gekennzeichnet, dass** eine Phasenverschiebung (Δϕ) zwischen einer auf den Gleisrost (5) einwirkenden Schwingung des Stabilisierungsaggregats (8) und der mittels der Kamera (11) erfassten resultierenden Schwingung des Gleisrostes (5) ermittelt wird.

13. Messverfahren nach einem der Ansprüche 5 bis 12, **dadurch gekennzeichnet, dass** im Bereich der Kamera (11) eine Schwingung des Maschinenrahmens (2) gemessen und in die Auswertung der resultierenden Auslenkung (sᵣ) des Gleisrostes (5) einbezogen wird.

## Claims

1. A machine (1) having a machine frame (2), mobile by means of on-track undercarriages (3) on rails (4) of a track grid (5), and a stabilizing unit (8) which comprises a vibration exciter (15) for generating horizontal vibrations extending transversely to the longitudinal direction of the machine and flanged rollers (10) designed to roll on the rails (4), wherein a camera (11) is mounted on the machine frame (2) to record a section of the track grid (5) set in vibrations, and that the camera (11) is connected to an evaluation device (16) in order to derive from recorded image data a resulting deflection (sᵣ) of the track grid (5), **characterized in that** the camera (11) is designed for capturing two-dimensional images (17, 18).

2. A machine (1) according to claim 1, **characterized in that** the evaluation device (16) is connected to a control (17) of the stabilizing unit (8) in order to actuate the vibration exciter (15) in dependence of the resulting deflection (sᵣ).

3. A machine according to claim 1or 2, **characterized in that** the camera (11) is arranged between two flanged rollers (10) of the stabilizing unit (8) in a vertical plane of symmetry extending transversely to the track.

4. A machine according to one of claims 1 to 3, **characterized in that** an acceleration transducer (12) is arranged on the machine frame (2) in the region of the camera (11).

5. A measuring method which is carried out by means of a machine (1) according to one of claims 1 to 4, **characterized in that** image data of the vibrating region of the track grid (5) are continuously recorded in a top view by means of the camera (11), and that from the recorded image data a resulting deflection (sᵣ) of the track grid (5) is derived.

6. A measuring method according to claim 5, **characterized in that** a first image (17), captured at the moment of a maximal deflection in one direction, is compared to a second image (18), captured at the moment of a maximal deflection in the opposite direction, in order to derive from this the resulting deflection (sᵣ) of the track grid (5).

7. A measuring method according to claim 6, **characterized in that** a position deviation (20) of image content identical in both images (17, 18) is evaluated as a measure of the resulting deflection (sᵣ) of the track grid (5).

8. A measuring method according to claim 7, **characterized in that** contours of a sleeper (6) and/or rail fastening means (14) are selected as identical image content.

9. A measuring method according to claim 5, **characterized in that**, during a vibration period of the track grid (5), image data are recorded at predetermined moments of capture (t₁, t₂, t₃, t₄), that for each moment of capture a deflection (s₁, s₂, s₃, s₄) of the track grid (5) is determined, and that from this a sinus-shaped vibration of the track grid (5) is derived.

10. A measuring method according to one of claims 5 to 9, **characterized in that** the images (17, 18) are captured at a frame rate which corresponds to at least a fourfold frequency of the horizontal vibration of the track grid (5).

11. A measuring method according to one of claims 5 to 10, **characterized in that** the recording of the image data and the horizontal vibration of the track grid (5) are synchronized.

12. A measuring method according to one of claims 5 to 11, **characterized in that** a phase shift (Δϕ) between a vibration of the stabilizing unit (8) acting upon the track grid (5) and the resulting vibration of the track grid (5) recorded by means of the camera (11) is determined.

13. A measuring method according to one of claims 5 to 12, **characterized in that** a vibration of the machine frame (2) is measured in the region of the camera (11) and included in the evaluation of the resulting deflection (sᵣ) of the track grid (5).

## Revendications

1. Machine (1) avec un châssis de machine (2) pouvant être déplacé au moyen de mécanismes de roulement ferroviaires (3) sur des rails (4) d'un châssis de voie (5) et avec un module de stabilisation (8) qui comprend un excitateur de vibrations (15) pour la génération de vibrations horizontales, s'étendant transversalement à la direction longitudinale de machine et des rouleaux de boudin (10) pouvant partir en dérive sur les rails (4), dans laquelle une caméra (11) est montée sur le châssis de machine (2) pour la détection d'une section du châssis de voie (5) amenée à vibrer et que la caméra (11) est connectée à un dispositif d'évaluation (16) pour dériver de données d'image détectées une déviation résultante (sᵣ) du châssis de voie (5), **caractérisée en ce que** la caméra (11) est réalisée pour l'enregistrement d'images bidimensionnelles (17, 18).

2. Machine (1) selon la revendication 1, **caractérisée en ce que** le dispositif d'évaluation (16) est connecté à une commande (17) du module de stabilisation (8) pour commander l'excitateur de vibrations (15) en fonction de la déviation résultante (sᵣ).

3. Machine (1) selon la revendication 1 ou 2, **caractérisée en ce que** la caméra (11) est disposée dans un plan de symétrie vertical, s'étendant transversalement à la voie ferrée, entre deux rouleaux de boudin (10) du module de stabilisation (8).

4. Machine (1) selon une des revendications 1 à 3, **caractérisée en ce qu'**un enregistreur d'accélération (12) est disposé sur le châssis de machine (2) dans la région de la caméra (11).

5. Procédé de mesure qui est réalisé au moyen d'une machine (1) selon une des revendications 1 à 4, **caractérisé en ce que** des données d'image de la région vibrante du châssis de voie (5) sont détectées en continu dans une vue de dessus au moyen de la caméra (11) et qu'une déviation résultante (sᵣ) du châssis de voie (5) est dérivée des données d'image détectées.

6. Procédé de mesure selon la revendication 5, **caractérisé en ce qu'**une première image (17) enregistrée au moment d'une déviation maximale dans une direction est comparée à une seconde image (18) enregistrée au moment d'une déviation maximale dans la direction opposée pour en dériver la déviation résultante (sᵣ) du châssis de voie (5).

7. Procédé de mesure selon la revendication 6, **caractérisé en ce qu'**un écart de position (20) de contenus d'image identiques dans les deux images (17, 18) est évalué en tant que mesure pour la déviation résultante (sᵣ) du châssis de voie (5).

8. Procédé de mesure selon la revendication 7, **caractérisé en ce que** des contours d'une traverse (6) et/ou des moyens de fixation de rail (14) sont sélectionnés en tant que contenus d'image identiques.

9. Procédé de mesure selon la revendication 5, **caractérisé en ce que** des données d'image sont détectées pendant une période de vibrations du châssis de voie (5) à des moments d'enregistrement prédéfinis (t₁, t₂, t₃, t₄), qu'une déviation (s₁, s₂, s₃, s₄) du châssis de voie (5) est déterminée à chaque moment d'enregistrement et qu'une vibration sinusoïdale du châssis de voie (5) en est dérivée.

10. Procédé de mesure selon une des revendications 5 à 9, **caractérisé en ce que** les images (17, 18) sont enregistrées avec une fréquence d'images qui correspond au moins à une fréquence quadruple de la vibration horizontale du châssis de voie (5).

11. Procédé de mesure selon une des revendications 5 à 10, **caractérisé en ce que** la détection des données d'image et la vibration horizontale du châssis de voie (5) sont synchronisées.

12. Procédé de mesure selon une des revendications 5 à 11, **caractérisé en ce qu'**un déphasage (Δϕ) entre une vibration agissant sur le châssis de voie (5) du module de stabilisation (8) et la vibration résultante du châssis de voie (5) détectée au moyen de la caméra (11) est déterminé.

13. Procédé de mesure selon une des revendications 5 à 12, **caractérisé en ce qu'**une vibration du châssis de machine (2) est mesurée dans la région de la caméra (11) et incorporée dans l'évaluation de la déviation résultante (sᵣ) du châssis de voie (5).
